# EUROPÄISCHE PATENTANMELDUNG

(11) **EP 0 976 537 A2**
(43) Veröffentlichungstag der Anmeldung: **02.02.2000**
(21) Anmeldenummer: 99112323.3
(22) Anmeldetag: 26.06.1999
(51) Int. Cl.: B29D 30/30, B29C 53/66

(54) **Vorrichtung zum spiralförmigen Aufwickeln einer Bandage**

(30) Priorität: 30.07.1998 DE 19834300
(71) Anmelder: Continental Aktiengesellschaft, 30165 Hannover (DE)
(72) Erfinder: Glinz, Michael, 31535 Neustadt (DE)

(57) **Zusammenfassung**

Vorrichtung zum spiralförmigen Aufwickeln einer Bandage aus einem Bandagenstreifen (11) oder einem Bandagencord auf die Gürtellagen eines Reifens, umfassend eine drehbare Reifen- oder Gürtelaufbautrommel (12), eine zumindest ein Streifenführungselement (17), über welches der Bandagenstreifen (11) oder der Bandagencord zumindest im wesentlichen senkrecht zur Trommel (12) abwickelbar ist, aufweisende Führung sowie eine dem Streifenführungselement (17) vorgelagerte Bremseinrichtung mit Bremsrollen (18). Die Bremseinrichtung besitzt zumindest zwei Bremsrollen (18), zwischen welchen der Bandagenstreifen (1) oder der Bandagencord verläuft.

## Beschreibung

Die vorliegende Erfindung betrifft eine Vorrichtung zum spiralförmigen Aufwickeln einer Bandage aus einem Bandagenstreifen oder einem Bandagencord auf die Gürtellagen eines Reifens umfassend eine drehbare Reifen- oder Gürtelaufbautrommel, eine zumindest ein Streifenführungselement, über welches der Bandagenstreifen oder Bandagencord zumindest im wesentlichen senkrecht zur Trommel abgewickelt wird, aufweisende Führung, sowie eine dem Streifenführungselement vorgelagerte Bremseinrichtung mit Bremsrollen.

Eine derartige Vorrichtung ist aus der EP 0 288 609 B1 bekannt. Diese Vorrichtung, die es gestattet, die Bandage mit unterschiedlicher Spannung auf den Gürtel bei der Herstellung des Reifens aufzuwickeln, besitzt zumindest eine Bremsrolle, die über eine elektromagnetische Bremse gesteuert wird, sodaß sich eine entsprechende Zugkraft am Bandagenstreifen in Folge der an die Bremsrolle angelegten, durch die elektromagnetische Bremse erzeugten Bremskraft einstellt. Darüber hinaus besitzt diese bekannte Vorrichtung Sensoren zum Erfassen der jeweiligen Wickelposition durch Bestimmung der Position der Streifenführungselemente. Es ist ferner eine Programmsteuerung vorgesehen, mit der die elektromagnetischen Bremsen derart eingestellt werden, daß die über die Bremsrollen auf den Bandagenstreifen wirkenden Zugkräfte an den axial äußeren Endbereichen der Trommel größer sind als im Mittel- bzw. Zenitbereich. Dabei kann eine schrittweise oder eine kontinuierliche Erhöhung der Zugkräfte eingestellt werden. Das Programm kann dabei auf den jeweils aufzubauenden Reifen, auf die Wicklungsart sowie auf die Reifenaufbautrommel abgestimmte Parameter enthalten und berücksichtigen. Zur mechanischen Führung und Bewegung der Streifenführungselemente in axialer Richtung sind diese auf einer mit einem Gewinde versehenen Stange, die über einen Keilriemen motorgetrieben gedreht werden kann, entsprechend gelagert. Es ist ferner eine Regeleinheit vorgesehen, die einen Zugkraftsensor aufweist, um die über die Bremsrolle auf den Bandagenstreifen ausgeübte Zugkraft zu ermitteln und der Steuereinheit rückzumelden.

Diese aus dem Stand der Technik bekannte Vorrichtung gestattet daher das Aufbringen der Bandage mit unterschiedlicher Spannung, insbesondere mit einer höheren Spannung im Bereich der Gürtelkanten bzw. Reifenschultern, was das ansonsten stattfindende Durchmesserwachstum eines Reifens bei hohen Geschwindigkeiten in diesen Bereichen verhindert und auch für einen gleichmäßigen Abrieb des Laufstreifens von Vorteil ist.

Die Erfindung hat sich nun zur Aufgabe gestellt, eine derartige, mit Bremsrollen ausgerüstete Vorrichtung, mit der der Bandagenstreifen oder Bandagencord mit höherer Aufzugsspannung an den Reifenschulterbereichen aufgebracht werden kann, zu vereinfachen, insbesondere, was den Steuerungs- und Regelungsaufwand der Bremseinrichtung betrifft. Die Vorrichtung soll dabei besonders zuverlässig arbeiten und mechanisch robust sein.

Gelöst wird die gestellte Aufgabe erfindungsgemäß dadurch, daß die Bremseinrichtung zumindest zwei Bremsrollen aufweist, zwischen welchen der Bandagenstreifen oder Bandagencord verläuft.

Mit der erfindungsgemäßen Vorrichtung ist daher auf besonders einfache Weise gewährleistet, daß in bestimmten axial seitlichen Positionen des Streifenführungselementes der Bandagenstreifen bzw. der Bandagencord mit der an dieser Seite befindlichen Bremsrolle in Kontakt tritt und ab diesem Zeitpunkt die Aufzugsspannung, je nach der Bremswirkung der Bremsrolle, erhöht wird.

Um die Aufzugsspannung bzw. deren Änderung in einem größeren Bereich beeinflussen zu können, ist es dabei von Vorteil, wenn die Bremseinrichtung zu jeder der Seiten der Aufbautrommel zu zumindest zwei Bremsrollen aufweist.

Bei einer bevorzugten und einfachen Ausführungsvariante der Erfindung ist dabei vorgesehen, daß die Bremsrollen paarweise und insbesondere symmetrisch zur Halbierenden der Aufbautrommel angeordnet sind.

Eine definierte Zuführung des Bandagenstreifens oder Bandagencordes wird nach einem weiteren Merkmal der Erfindung dadurch sichergestellt, daß den Bremsrollen ein eng beabstandetes Paar von Führungsrollen vorgeordnet ist. Wird ein Bandagenstreifen verwendet, wird dieser zwischen dem Führungsrollenpaar auch in seine zur Anlage mit den Bremsrollen korrekte Position gekippt bzw. gedreht. Dabei sind die Führungsrollen derart gelagert, daß sie möglichst reibungslos drehbar sind.

Gemäß einer weiteren Ausgestaltung der Erfindung kann die Bremswirkung der Bremsrollen elektromagnetisch einstellbar sein.

Um die Bremseinrichtung an unterschiedliche Anforderungen anpassen zu können, ist es ferner von Vorteil, wenn die Position der Bremsrollen veränderbar bzw. einstellbar ist.

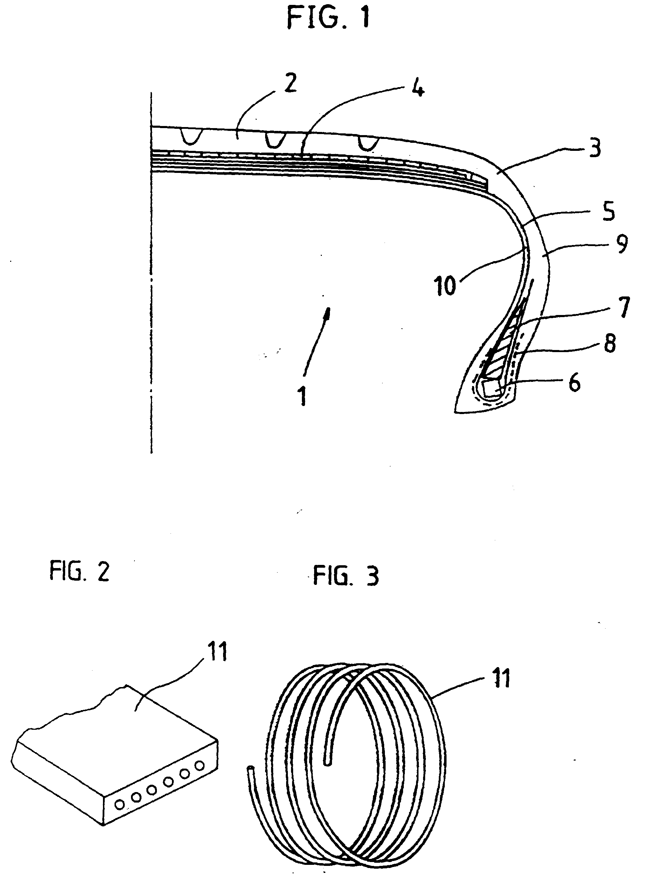

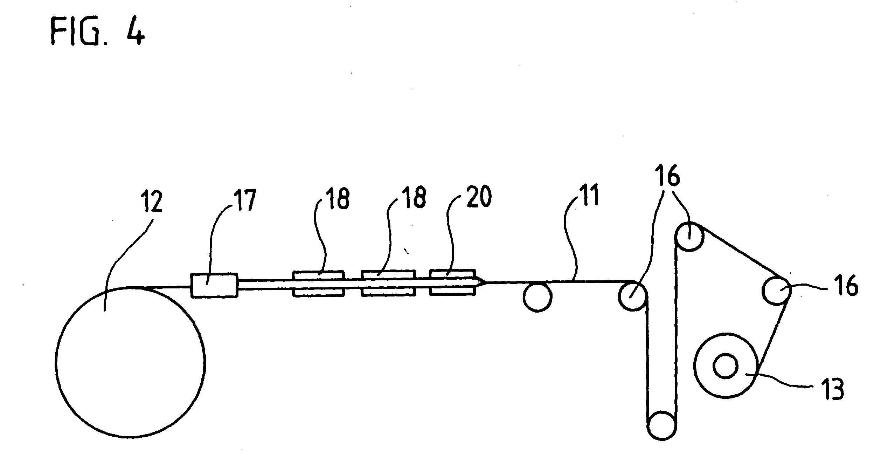

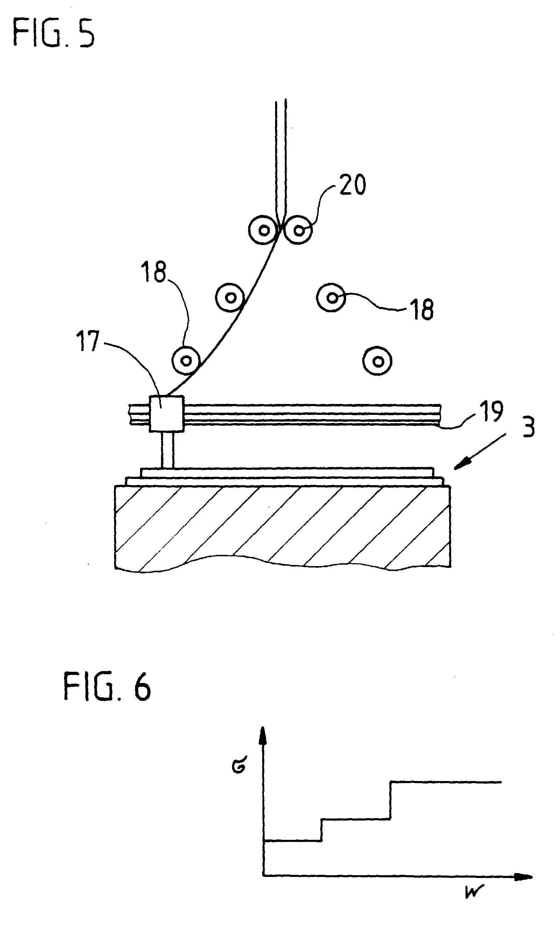

Weitere Merkmale, Vorteile und Einzelheiten der Erfindung werden nun anhand der Zeichnungsfiguren, die sämtlich schematische Darstellungen sind, näher erläutert. Dabei zeigen Fig. 1 einen Querschnitt durch einen Fahrzeugluftreifen, Fig. 2 im Schnitt und in Schrägansicht eine Ausführungsvariante eines Bandagenstreifens, Fig. 3 die Art und Weise der Wicklung des Bandagenstreifens auf das Gürtelpaket eines Fahrzeugluftreifens, Fig. 4 eine Seitenansicht einer Ausführungsform einer erfindungsgemäßen Vorrichtung zum Aufbringen eines Bandagencordes oder Bandagenstreifens auf das Gürtelpaket eines Fahrzeugluftreifens, Fig. 5 eine Draufsicht auf einen Teil der Vorrichtung gemäß Fig. 4 und Fig. 6 ein Spannungs - Weg - Diagramm des mit der erfindungsgemäßen Vorrichtung auf das Gürtelpaket gewickelten Bandagenstreifens.

Der in Fig. 1 dargestellte Fahrzeugluftreifen 1 setzt sich aus den üblichen Reifenbauteilen zusammen und umfaßt daher einen profilierten Laufstreifen 2, einen Gürtel 3, eine Gürtelbandage 4, eine im vorliegenden Ausführungsbeispiel einlagig dargestellte Radialkarkasse 5, die um jeden Wulstkern 6 in herkömmlicher Weise gelegt ist, je ein Kernprofil 7 radial außerhalb des Wulstkernes 6, Wulstschutzstreifen 8, je eine Seitenwand 9 und eine luftdicht ausgeführte Innenplatte 10.

Im dargestellten Ausführungsbeispiel besteht der Gürtel 3 aus zwei Gürtellagen mit in jeder Lage parallel verlaufenden Festigkeitsträgern, insbesondere aus Stahlcord, wobei sich die Festigkeitsträger in den beiden benachbarten Lagen kreuzen. Im Reifen sind die Gürtellagen derart angeordnet, daß die parallel zueinander verlaufenden Stahlcorde mit der Umfangsrichtung des Reifens einen spitzen Winkel in der Größenordnung von 15 bis 30°, insbesondere von 20 bis 25°, einschließen. Wie aus Fig. 1 in Verbindung mit den Figuren 2 und 3 hervorgeht, ist die Bandage 4 als sogenannte Spulbandage ausgeführt, bei der ein Bandagenstreifen 11, welcher aus in eine Gummimischung eingebetteten, in Längsrichtung des Streifens 11 verlaufenden, wärmeschrumpffähigen textilen Festigkeitsträgern besteht, um den Gürtel 3 gewickelt bzw. gespult wird. Der Bandagenstreifen 11 kann beispielsweise mit Nylonfäden, etwa Nylon 6,6 verstärkt sein, wobei, wie beispielsweise Fig. 2 zeigt, mehrere Fäden pro Zentimeter Streifenbreite verwendet werden, insbesondere ist eine Anordnung von 7 bis 12 Fäden pro Zentimeter Streifenbreite, beispielsweise von 10 Fäden, üblich. Der Bandagenstreifen 11 selbst hat üblicherweise eine Breite von 10 bis 15 mm.

Fig. 3 zeigt schematisch die Art und Weise der spiralförmigen Wicklung eines solchen Bandagenstreifens 11. Dabei wird der Bandagenstreifen 11 so gewickelt, daß eine den Gürtel 3 insbesondere komplett abdeckende und Stoß an Stoß gewickelte Spulbandage 4 entsteht. Es können jedoch auch mehrere Lagen Spulbandage auf einen Reifen aufgebracht werden, insbesondere können an den Schulterbereichen abschnittsweise zusätzliche Bandagenlagen aufgebracht werden, die eine Breite von zumindest 15% der Breite des Gürtels 3 aufweisen sollten und die Ränder des Gürtels 3 abdecken sollten.

Wie eingangs bereits erwähnt, ist es für die Hochgeschwindigkeitstauglichkeit eines Reifens, etwa um eine unerwünschte Durchmesservergrößerung des Reifens in den Schulterbereichen durch die bei hohen Geschwindigkeiten auftretenden hohen Zentrifugalkräfte zu verhindern, von großem Vorteil, im Bereich der Reifenschultern bzw. der Gürtelkanten die Bandage mit einer höheren Aufzugsspannung aufzubringen als im Reifenzenitbereich. Die in den Figuren 4 und 5 dargestellte erfindungsgemäße Vorrichtung gestattet nun ein Erhöhen der Aufzugsspannung zu den Reifenschulterbereichen hin bzw. im Bereich der Gürtelkanten auf besonders einfache und zuverlässige Art und Weise. Eine aufwendige elektronische Steuerung und Regelung kann entfallen.

In Fig. 4 ist mit 12 die Gürteltrommel mit den bereits aufgebrachten Gürtellagen bezeichnet. Der Bandagenstreifen 11 wird von einer Spule 13 abgewickelt, über eine in an sich bekannter Weise ausgeführte Ausgleichsschleife mit Rollen 16 geführt und gelangt, wie noch ausführlich beschrieben wird, über paarweise angeordnete Führungsrollen 20 und, je nach Position, auch über Bremsrollen 18 auf ein Streifenführungselement 17, von wo aus das Aufwickeln auf die Gürtellagen erfolgt. Das Streifenführungselement 17 kann über eine Führungsstange 19 mittels in an sich bekannter Weise ausgeführter, durch einen Motor angetriebener Mechanismen, die einen mit einem Gewinde versehenen Schaft 19 umfassen können und ansonsten gesondert nicht dargestellt sind, in axialer Richtung bewegt werden. Das Streifenführungselement 17 ist die Zentralführung für den Bandagenstreifen 11 und gewährleistet eine ordnungsgemäße Stoß - an - Stoß - Wicklung des Bandagenstreifens 11.

Zwischen der Zuführung des Bandagenstreifens 11 durch die Ausgleichsschleife und dem Streifenführungselement 17 ist, wie bereits erwähnt, eine Anzahl von Bremsrollen 18 angeordnet.

Wie insbesondere Fig. 5 zeigt, sind dabei paarweise angeordnete Rollen, 18, 20 dem Streifenführungselement 17 vorgeordnet. Die paarweise Anordnung erfolgt symmetrisch zur die Gürtelaufbautrommel teilenden Halbierenden bzw. symmetrisch zur Mittellängsachse des umlaufenden Gürtels 3. Das erste Rollenpaar, mit dem der Bandagenstreifen 11 in Funktion tritt, ist ein Paar von Führungsrollen 20, die sehr wenig, im Bereich von einigen Millimetern beabstandet sind, sodaß dieses Rollenpaar ein Aufstellen bzw. 90°-Verdrehen des Bandagenstreifens 11 bewirkt. Im Streifenführungselement 17 wird, beispielsweise durch dort vorgesehene, nicht dargestellte Umlenkrollen od. dgl.. die Verdrehung wieder rückgängig gemacht, und der Bandagenstreifen 11 senkrecht zur Aufbautrommel ausgerichtet, sodaß der Bandagenstreifen 11 in gewünschter Weise über das Gürtelpaket gewickelt werden kann. Die beiden Paare von Bremsrollen 18 besitzen einen Abstand voneinander, der umso größer ist, je näher das Rollenpaar dem Streifenführungselement 17 liegt.

Die Führungsrollen 20 sind als frei und möglichst reibungsfrei laufende Rollen ausgebildet. Die Bremsrollen 18 werden in ihrem Drehvermögen entsprechend gebremst, was bevorzugt durch nicht dargestellte elektromagnetische Bremsen, welche die Bremsrollen 18 steuern, erfolgen kann.

Solange eine Abwicklung bzw. Aufwicklung des Bandagenstreifens 11 im Reifenzenitbereich erfolgt, ist dieser nur in Kontakt mit den Führungsrollen 20. Wird das Streifenführungelement 17 in Richtung einer der beiden den Gürtelkanten entsprechenden Positionen bewegt, so erfolgt eine Kontaktaufnahme des Bandagenstreifens 11 mit der einen Bremsrolle 18 des ersten Paares von Bremsrollen 18, was die Zugkraft auf den Bandagenstreifen 11 erhöht. Verändert das Streifenführungselement 17 seine Position weiter zu einem der Gürtelkantenbereiche hin, erfolgt eine zusätzliche Kontaktierung des Bandagenstreifens 11 mit der zweiten Bremsrolle 18. Wie Fig. 6 zeigt, erfolgt dadurch ein im wesentlichen schrittweises Erhöhen der Aufzugsspannung σ.

Die Führungsrollen 20 und die Bremsrollen 18 werden bevorzugt so angeordnet, daß ihre Position zumindest in axialer Richtung verändert und die Rollen in veränderter Position fixiert werden können.

Die erfindungsgemäße Vorrichtung umfaßt mindestens zwei Bremsrollen, die vorzugsweise paarweise angeordnet sind, insbesondere werden zwei oder mehr Paare vorgesehen, womit auch eine Erhöhung der Aufzugsspannung in kleineren Stufen erfolgen kann.

Von der dargestellten Ausführungsform abweichend kann auch eine bezüglich der Halbierenden der Aufbautrommel asymmetrische Anordnung der Bremsrollen getroffen werden. Darüber hinaus kann die Anzahl der Bremsrollen, die zu jeder der Seiten der Aufbautrommel hin angeordnet sind und dort ihre Wirkung entfalten, unterschiedlich gewählt werden, um besonderen Anforderungen, insbesondere dem Wunsch nach unterschiedlich großen oder unterschiedlich einzustellenden Aufzugsspannungen für die Gürtelbandage gerecht zu werden.

Mit einer erfindungsgemäß ausgeführten Vorrichtung ist es auch möglich, eine Bandage bestehend aus einem Einzelcord, bei dem es sich insbesondere um einen geschlagenen Cord mit zumindest zwei miteinander verdrillten Fäden handeln wird, aufzubringen. In diesem Fall kann es auch von Vorteil sein, die Wicklungsdichte, das heißt also den Abstand der einzelnen Wicklungen des Cordes, entsprechend zu ändern, insbesondere zu den Schulterbereichen zu eine höhere Wicklungsdichte zu wählen.

Es wird ferner darauf verwiesen, daß es nicht unbedingt erforderlich ist, ein Führungsrollenpaar vorzusehen. Sobald der Bandagenstreifen 11 mit einer Bremsrolle 18 in Kontakt tritt, verdreht er sich von selbst und tritt in flächige Berührung mit der Bremsrolle 18.

Wie bereits erwähnt, kann es von Vorteil sein, die Position der Bremsrollen 18 zumindest in axialer Richtung verändern zu können, um einerseits eine Abstimmung auf die jeweilige Reifendimension sicherzustellen und um andererseits die Anzahl der zur Wirkung gelangenden Bremarollen 18 festlegen zu können. Es ist ferner auch von Vorteil, wenn die erfindungsgemäße Vorrichtung so gestaltet wird, daß die Bremsrollen auf einfache Art und Weise ausgetauscht werden können.

## Patentansprüche

1. Vorrichtung zum spiralförmigen Aufwickeln einer Bandage aus einem Bandagenstreifen oder einem Bandagencord auf die Gürtellagen eines Reifens, umfassend eine drehbare Reifen- oder Gürtelaufbautrommel, eine zumindest ein Streifenführungselement, über welches der Bandagenstreifen oder Bandagencord zumindest im wesentlichen senkrecht zur Trommel abwickelbar ist, aufweisende Führung, sowie eine dem Streifenführungselement vorgelagerte Bremseinrichtung mit Bremsrollen, dadurch gekennzeichnet, daß die Bremseinrichtung zumindest zwei Bremsrollen (18) aufweist, zwischen welchen der Bandagenstreifen (11) oder Bandagencord verläuft.

2. Vorrichtung nach Anspruch 1, dadurch gekennzeichnet, daß die Bremseinrichtung zu jeder der Seiten der Aufbautrommel (12) zu zumindest zwei Bremsrollen aufweist.

3. Vorrichtung nach Anspruch 1 oder 2, dadurch gekennzeichnet, daß die Bremsrollen (18) paarweise und insbesondere symmetrisch zur Halbierenden der Aufbautrommel (12) angeordnet sind.

4. Vorrichtung nach einem der Anspruch 1 bis 3, dadurch gekennzeichnet, daß den Bremsrollen (18) ein eng beabstandetes Paar von Führungsrollen (20) vorgeordnet ist.

5. Vorrichtung nach Anspruch 4, dadurch gekennzeichnet, daß die Führungsrollen (20) als freilaufende Rollen gelagert sind.

6. Vorrichtung nach einem der Ansprüche 1 bis 5, dadurch gekennzeichnet, daß die Bremswirkung der Bremsrollen (18) elektromagnetisch einstellbar ist.

7. Vorrichtung nach einem der Ansprüche 1 bis 6, dadurch gekennzeichnet, daß die Position der Bremsrollen (18) veränderbar bzw. einstellbar ist.
